# EUROPÄISCHE PATENTSCHRIFT

(11) **EP 0 610 550 B1**
(45) Veröffentlichungstag und Bekanntmachung des Hinweises auf die Patenterteilung: **11.03.1998**
(21) Anmeldenummer: 93116539.3
(22) Anmeldetag: 13.10.1993
(51) Int. Cl.: G01N 1/12

(54) **Probennehmer**
Sampler
Echantillonneur

(30) Priorität: 09.02.1993 DE 4303688
(43) Veröffentlichungstag der Anmeldung: 17.08.1994
(73) Patentinhaber: Heraeus Electro-Nite International N.V., 2000 Antwerpen (BE)
(72) Erfinder: Baerts, Christian, B-3940 Beringen-Paal (BE)
(74) Vertreter: Kühn, Hans-Christian

(56) Entgegenhaltungen:
- EP-A- 0 402 638
- EP-A- 0 404 291
- DD-A- 285 190
- US-A- 4 002 069
- PATENT ABSTRACTS OF JAPAN vol. 13, no. 215 (P-874) 19. Mai 1989 & JP-A-01 032 166 (KAWASOU DENKI) 2. Februar 1989
- PATENT ABSTRACTS OF JAPAN vol. 7, no. 48 (P-178) (1193) 24. Februar 1983 & JP-A-57 197 467 (OOSAKA SANSO) 3. Dezember 1982

## Beschreibung

Die Erfindung betrifft einen Probennehmer für Metallschmelze mit einer in einem Trägerrohr angeordneten Flachprobenkammer, die einen auf der dem Eintauchende des Trägerrohres abgewandten Seite der Flachprobenkammer angeordneten Einlaufkanal mit einer Einströmöffnung aufweist und die etwa eine eine Probenanalysefläche formende Wandfläche besitzt, die parallel zu der Achse des Trägerrohres verläuft, wobei innerhalb des Trägerrohres an dem dem Eintauchende des Trägerrohres abgewandten Ende des Einlaufkanals oberhalb der Flachprobenkammer zwischen dem Einlaufkanal und der Einströmöffnung eine Vorkammer angeordnet ist, deren Querschnittsfläche quer zur Einströmrichtung durch die Einströmöffnung größer ist als die Querschnittsfläche der Einströmöffnung und deren Querschnittsfläche quer zur Achse des Einlaufkanals im Bereich seines Einlaufes größer ist als die Querschnittsfläche des Einlaufes des Einlaufkanals.

Ein derartiger Probennehmer ist aus JP-A-57197467 bekannt. Dieser Probennehmer ermöglicht ein sehr rasches Einlaufen der Metallschmelze in eine Vorkammer. Von dort aus fließt die Metallschmelze in die Probennahmekammer. Aufgrund des großen Durchmessers der Vorkammer kann sich die einlaufende Metallschmelze in dieser Vorkammer beruhigen, so daß Verunreinigungen in der Metallschmelze sich tendenziell nach oben, also in den der Probenkammer entgegengesetzten Teil der Vorkammer bewegen werden. Die durch die relativ große Einlauföffnung in die Vorkammer einströmende Metallschmelze trifft mit hoher Energie auf die Vorkammerwand auf, so daß hier eine Gefahr der Beschädigung bzw. Zerstörung der Vorkammerwand entsteht. Aus US-A-4,002,069 ist ein Probennehmer bekannt mit einer Vorkammeranordnung, in der als Desoxidationsmittel ein zylindrischer Körper angeordnet ist. Dadurch wird das Volumen der Vorkammer wesentlich reduziert, so daß die Metallschmelze mit hoher Geschwindigkeit in die Probenkammer einläuft.

Ein ähnlicher Probennehmer ist aus der DD 285190 bekannt. Es wird eine in einem Trägerrohr angeordnete Flachprobenkammer beschrieben, deren die Analyseflächen formenden Wandflächen parallel zu der Achse des Trägerrohres verlaufen. Die Einlauföffnung in die Probenkammer ist auf der dem Eintauchende abgewandten Seite der Probenkammer angeordnet. Die Einlauföffnung erstreckt sich in einem Einlaufkanal, der koaxial zu der Achse des Trägerrohres verläuft und an seinem oberen, dem Eintauchende abgewandten Ende abgewinkelt ist und durch die Wand des Trägerrohres hindurchführt. Durch dieses abgewinkelte Teilstück dringt die Schmelze in den koaxialen Einlaufkanal und von dort in die Probenkammer. Nach Erstarren bildet der koaxiale Einlaufkanal gleichzeitig eine Stiftprobe aus. Da die Probenkammer aus zwei Hälften gebildet ist, können zwar die vor dem Eintauchen in die Schmelze in der Probenkammer befindlichen Gase durch die Trennstellen zwischen den beiden Kammerhälften aus der Probenkammer entweichen, die mit der Schmelze in die Probenkammer eindringenden Gase und andere Verunreinigungen werden jedoch mit in die Probenkammer geführt und verbleiben dort als Einschlüsse in der Probe. Diese Einschlüsse beeinträchtigen jedoch die Probenqualität und damit die Zuverlässigkeit der Probenanalyse beträchtlich. Die in der Probe vorhandenen Verunreinigungen befinden sich nicht ausschließlich im Inneren der Probe sondern sie beeinträchtigen auch die Qualität der Probenanalysenflächen durch ihr Auftreten direkt im Bereich dieser Flächen. Damit aber ist ein wesentlicher Vorteil der Flachprobenkammern gegenüber kompakten Probenkammern infrage gestellt, nämlich der, daß die durch die Kammerwand gebildete Probenanalysefläche nahezu unbearbeitet für die Analyse zur Verfügung steht.

Ein weiterer Probennehmer ist aus der GB 1150149 bekannt. Hier ist im Zusammenhang mit Figur 6 eine Flachprobe beschrieben, deren Analyseflächen quer zur Achse des Trägerrohres angeordnet sind. Da die Abkühlung der Probe stets von außen nach innen (radial zur Trägerrohrachse) verläuft, weisen die Probenanalysenflächen entsprechend dem Abkühlungsverlauf unterschiedliche Zusammensetzungen auf, abhängig von der Entfernung des Meßpunktes vom Rand der Fläche. Für die Probenentnahme ist es bei der beschriebenen Vorrichtung zudem nachteilig, daß die Probenkammer als Temperatursenke wirkt und ein schnelles Erstarren der Probe sowie der darüber liegenden Metallschmelze bewirkt. Durch dieses schnelle Erstarren der in dem Probennehmer befindlichen Schmelze werden die mit der Schmelze in die Probenkammer einlaufenden Verunreinigungen in der Probe fixiert und beeinträchtigen ebenfalls das Analysenergebnis. Dieser schnelle Erstarrungsvorgang wird durch die Anordnung von Mischkammer und Probenkammer in einem gemeinsamen Gehäuse begünstigt. Das gemeinsame Gehäuse erschwert auch die Entnahme der Probe aus dem Probennehmer.

Weitere Probennehmer sind aus JP-A-1032166 und EP-A-0 404 291 bekannt. Die hier beschriebenen Probennehmer weisen Probenkammern auf, denen jeweils eine Vorkammer vorgelagert ist. Diese Vorkammern sind jedoch nicht dazu geeignet, daß Verunreinigungen in der Metallschmelze sich innerhalb dieser Vorkammern nach oben, zu dem der Probenkammer entgegengesetzten Ende der Vorkammer hin absetzen können, da eine solche Auftriebsbewegung durch die Form der Vorkammeranordnung bzw. die Einströmrichtung der in die Vorkammer einlaufenden Metallschmelze verhindert wird.

Der vorliegenden Erfindung liegt die Aufgabe zugrunde, einen Probennehmer für Metallschmelze anzugeben, der eine Gewinnung hochwertiger Flachproben sowie deren leichte Entfernbarkeit aus dem Probennehmer ermöglicht.

Erfindungsgemäß wird die Aufgabe für einen Probennehmer nach dem Oberbegriff des Anspruchs 1 dadurch gelöst, daß die Wandstärke der Vorkammer im Bereich ihres Eintauchendes etwa 1 bis 5 mm und in dem dem Eintauchende abgewandten Bereich etwa 2 bis 10 mm beträgt, wobei die Einströmöffnung in dem dem Eintauchende abgewandten Bereich mit der größeren Wandstärke angeordnet ist. Der Probennehmer ist beispielsweise zur Probennahme von Metallschmelze in einem Konverter geeignet. Eine mit einem derartigen Probennehmer gewonnene Probe weist einerseits eine sehr gleichmäßige Probenqualität, insbesondere auch im Bereich ihrer Oberfläche auf und ist andererseits sehr leicht aus dem Probennehmer entnehmbar. Die Abkühlung vollzieht sich senkrecht zur Probenanalysefläche, so daß die Probenoberfläche sehr homogen ist. Durch die der Probenkammer vorgelagerte Vorkammer wird die Einströmgeschwindigkeit der Schmelze zunächst reduziert, so daß mit der Schmelze einströmende Verunreinigungen, wie Schlacketeilchen oder Gase, sich dem Auftrieb folgend nach oben bewegen. Durch diesen Reinigungsprozeß ist die in die Probenkammer einströmende Metallschmelze weitgehend frei von solchen Verunreinigungen. Die Abkühlung der Metallschmelze in der Probenkammer vollzieht sich relativ langsam, so daß zum einen Verunreinigungsteilchen in der Probenkammer nach oben auftreiben und so zu einem weiteren Teil aus der Probe entfernt werden. Zum anderen ermöglicht der langsame Erstarrungsprozeß, das leichtere Abtrennen der Probenkammer von der Vorkammer im Bereich des Einlaufkanals, da es sich gezeigt hat, daß die Metallschmelze im Bereich des Einlaufkanals zum Zeitpunkt der Abtrennung der Probenkammer in der Regel noch nicht vollständig erstarrt ist. Die Flächen, die dem in die Probenkammer einfließenden Strahl der Metallschmelze direkt ausgesetzt sind, unterliegen durch die hohe Energie dieser Metallschmelze sehr hohen thermischen und mechanischen Belastungen. Durch die erhöhte Wandstärke in dem genannten Bereich der Vorkammer wird verhindert, daß die Vorkammer durch die einströmende Metallschmelze zerstört wird, da sowohl die thermische als auch die mechanische Stabilität der Vorkammerwand mit steigender Wandstärke ansteigt. Der am Eintauchende gelegene Bereich der Vorkammer, dessen Wand nicht dem unmittelbaren Aufprall der in die Vorkammer einströmenden Metallschmelze ausgesetzt ist, weist eine geringere Wandstärke auf. Damit wird verhindert, daß eine zu hohe Wärmemenge aus der Metallschmelze an die Wand abgegeben wird, so daß auf diese Weise ein Erstarren der einfließenden Schmelze verzögert und ein Abscheiden von Verunreinigungen aus der Metallschmelze begünstigt wird. Durch die somit verzögerte Erstarrung wird auch die Probenentnahme, wie oben bereits erläutert, erleichtert. Zur Verzögerung dient auch die in diesem Fall an dem in die Vorkammer hineinragenden Ende des Quarzrohres vorteilhafterweise angeordnete Verzögerungskappe. Dadurch wird der Auftriebseffekt der leichteren Verunreinigungen der Metallschmelze verbessert.

Vorteilhaft ist es, daß die Wände der Vorkammer und die Umrandung der Einströmöffnung aus hochschmelzendem Metall, beispielsweise aus Stahl gebildet sind. Damit sind die Teile, die beim Einströmen der Schmelze am stärksten belastet werden, vor Zerstörung geschützt und es wird verhindert, daß die Probe durch Bestandteile des Probennehmers verunreinigt wird. Außer Stahl wäre es auch denkbar, andere feuerfeste Materialien wie Quarz oder Keramik oder auch ein anderes hochschmelzendes Metall zu verwenden. Vorzugsweise sind die Vorkammer und der Einlaufkanal zylindrisch ausgebildet, wobei der Durchmesser der Vorkammer mindestens doppelt so groß ist, wie der Durchmesser des Einlaufkanals. Der Durchmesser des Einlaufkanals ist zweckmäßigerweise kleiner als der Durchmesser der Einströmöffnung. Durch eine solche Gestaltung bestehen optimale Bedingungen für eine Beruhigung der Schmelze und einen gleichmäßigen Einlauf in die Probenkammer. Vorteilhaft hat sich dabei eine Durchmesser der Vorkammer von etwa 22 bis 50 mm, insbesondere von 30 bis 40 mm sowie ein Durchmesser des Einlaufkanals von etwa 5 bis 11 mm, insbesondere von etwa 8 bis 9 mm erwiesen.

Insbesondere kann die Wandstärke der Vorkammer im Bereich ihres Eintauchendes etwa 1 bis 2 mm und in dem dem Eintauchende abgewandten Bereich etwa 3 bis 4 mm betragen. Besonders vorteilhaft ist es im Fall einer derart zweigeteilten Vorkammer, daß der Bereich mit der geringeren Wandstärke etwa ein- bis dreimal so lang ist, wie der Bereich mit der größeren Wandstärke.

Weiterhin ist es vorteilhaft, daß die Flachprobenkammer mindestens zwei Kammerbereiche mit unterschiedlicher Dicke aufweist, die in Einlaufrichtung gesehen hintereinander angeordnet sind, wobei der Kammerbereich mit der größeren Dicke in dem dem Eintauchende abgewandten Ende der Flachprobenkammer angeordnet ist. Durch die in Eintauchrichtung oben angeordnete größere Dicke wird auch der Auftrieb und das Entweichen von in die Probenkammer mitgerissenen Verunreinigungen begünstigt.

Nachstehend wird die Erfindung in einem Ausführungsbeispiel anhand einer Zeichnung näher erläutert.

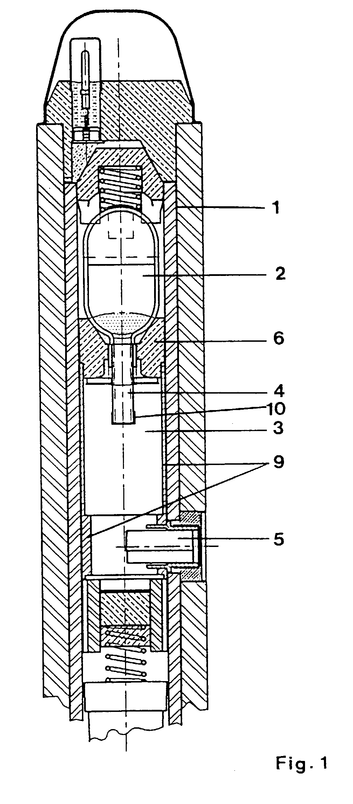

In der Zeichnung zeigt Figur 1 einen erfindungsgemäßen Probennehmer im Längsschnitt.

Figur 2 zeigt die schematische Darstellung einer mit dem erfindungsgemäßen Probennehmer gewonnenen Probe.

Figur 3 zeigt die schematische Darstellung einer mit einem Probennehmer nach dem Stand der Technik gewonnenen Probe.

Der Probennehmer weist ein Trägerrohr 1 auf, das zwei ineinander gesteckte Papprohre beinhaltet und in dem die Flachprobenkammer 2 und die Vorkammer 3 angeordnet sind. Die Flachprobenkammer 2 ist an dem Eintauchende des Probennehmers angeordnet. An dem dem Eintauchende abgewandten Ende der Flachprobenkammer 2 ist ein aus einem Quarzrohr gebildeter Einlaufkanal 4 angeordnet, der die Flachprobenkammer 2 mit der Vorkammer 3 verbindet. Die Einströmöffnung 5 ist durch das Trägerrohr 1 hindurch in die Vorkammer 3 geführt. In Figur 1 ist eine solche Anordnung gezeigt. Der Querschnitt der Vorkammer 3 ist dabei in jeder Richtung größer als der Querschnitt der Einströmöffnung 5 und des Einströmkanals 4, jeweils quer zur Strömungsrichtung gesehen. Dadurch gelangt die Metallschmelze vor ihrem Einlaufen in die Flachprobenkammer 1 in eine Art Pufferzone, in der sie mehr oder weniger beruhigt wird, wobei sich leichtere Verunreinigungsteilchen und Gasblasen entsprechend der Schwerkraftwirkung aus dem Bereich des Einlaufkanals 4 hinweg bewegen werden. Um ein vorschnelles Erstarren der Schmelze zu vermeiden und die Auftriebbewegung der Verunreinigungen zu begünstigen, sind sowohl die Vorkammer 3 als auch der Einlaufkanal 4 zylindrisch ausgebildet, wobei der Durchmesser der Vorkammer 3 etwa 30 bis 40 mm und der Durchmesser des Einlaufkanals 4 etwa 8 bis 9 mm beträgt. Der Durchmesser der mit Stahl umrandeten Einströmöffnung 5 ist dabei größer als der Durchmesser des Einlaufkanals 4. Die Wand 9 der Vorkammer 3 ist aus Stahl gebildet. Durch diese Abmessungen bleibt die in den Probennehmer eingeflossene Metallschmelze sehr lange flüssig, so daß sich die Flachprobenkammer 2 durch Zerstörung des Einlaufkanals 4 leicht aus dem Probennehmer entfernen läßt. Dazu trägt auch die Isolierung 6 aus Zement oder Keramik bei, die um den Einlaufkanal 4 herum angeordnet ist und sowohl an der Flachprobenkammer 2 als auch an der Vorkammer 3 anliegt. Diese Isolierung 6 bewirkt außerdem eine thermische Trennung der metallenen Flachprobenkammer 2 von der Vorkammer 3.

Die Vorkammer 3 weist zwei Bereiche unterschiedlicher Wandstärke auf, wobei ein Bereich mit einer Wandstärke von etwa 1 bis 2 mm in dem dem Eintauchende zugewandten Bereich der Einlaufkammer 3, also nach dem Einlaufkanal 4, angeordnet ist, während der zweite Bereich mit einer Wandstärke von 3 bis 4 mm, in den die Einströmöffnung 5 mündet, in dem der Flachprobenkammer 2 abgewandten Bereich der Vorkammer 3 angeordnet ist. Hier bewirkt die größere Wandstärke im Bereich der Einströmöffnung 5 die gute Widerstandsfähigkeit der Vorkammer 3 gegenüber einer Zerstörung durch die mit hoher Geschwindigkeit einschießende Metallschmelze, während die geringere Wandstärke im Bereich des Einlaufkanals 4 verhindert, daß durch die Wand 9 zu viel Wärme aus der Metallschmelze entzogen wird, so daß auch in dieser Anordnung ein vorzeitiges Erstarren der Metallschmelze in der Vorkammer 3 verhindert wird. Auf der Mündung des Einlaufkanales 4 in die Vorkammer 3 ist eine Verzögerungskappe 10 angeordnet.

Die Metallschmelze wird also in dem Bereich der Vorkammer 3 die höchste Temperatur aufweisen, in den der Einlaufkanal 4 mündet. Dadurch können sich Verunreinigungen und Gasblasen gerade in diesem Teil der Vorkammer 3 sehr gut der Schwerkraft folgend von der Flachprobenkammer 2 hinweg bewegen und die Schmelze läuft durch ihre temperaturbedingt geringere Viskosität sehr gut und blasenfrei in die Flachprobenkammer 2 ein. Die Flachprobenkammer 2 weist zwei Kammerbereiche mit unterschiedlicher Dicke auf, die hintereinander angeordnet sind, wobei der Kammerbereich mit der größeren Dicke in dem dem Eintauchende abgewandten Ende der Flachprobenkammer 2 angeordnet ist. Dies ist der Bereich, in den die Metallschmelze zuerst eintritt und der während der Probennahme in Schwerkraftrichtung gesehen oben angeordnet ist, so daß, bedingt durch die Anordnung der Vorkammer 3, auch aus diesem Bereich noch ein Auftrieb der in der Flachprobenkammer 2 enthaltenen Gase erfolgt.

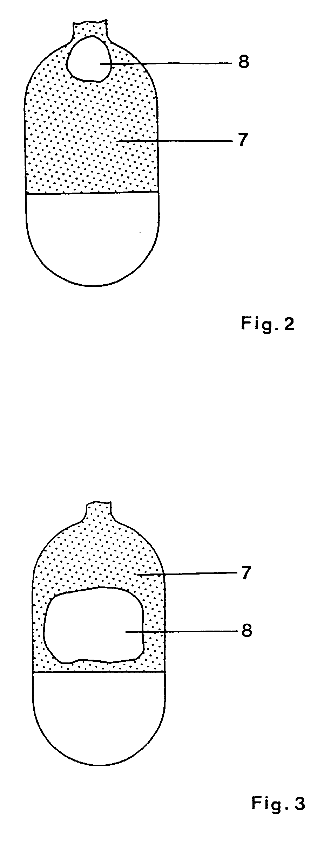

Mit dem beschriebenen Probennehmer ist die Gewinnung qualitativ hochwertiger Proben möglich. Figur 2 zeigt die schematische Darstellung einer solchen Probe 7, wobei in dem im Schnitt dargestellten Bereich mit der größeren Dicke eine Gasblase 8 dargestellt ist, die im Bereich des Einlaufkanals 4, also kurz vor ihrer Entfernung aus der Flachprobenkammer 2, erstarrt ist. Im Gegensatz dazu ist in Figur 3 eine mit einem herkömmlichen Probennehmer gewonnene Probe 7 dargestellt. Eine wesentlich größere Blase 8 ist in der Mitte der Probe 7 erstarrt, da ein Entweichen der Gase aus der Flachprobenkammer 2 nicht möglich war. Solche großen Gasblasen 8, die in der Regel neben einer Vielzahl kleinerer Gaseinschlüsse zu finden sind, führen jedoch zu einer Verfälschung der Meßergebnisse, da diese Gaseinschlüsse unregelmäßig in der Probe 7 verteilt und nicht exakt lokalisierbar sind. Dahingegen spielen die lediglich im Bereich des Einlaufkanals 4 angeordneten Gasblasen 8 bei der meßtechnischen Auswertung der Probe 7 keine wesentliche Rolle.

## Patentansprüche

1. Probennehmer für Metallschmelze mit einer in einem Trägerrohr angeordneten Flachprobenkammer, die einen auf der dem Eintauchende des Trägerrohres abgewandten Seite der Flachprobenkammer angeordneten Einlaufkanal mit einer Einströmöffnung aufweist und die eine eine Probenanalysefläche formende Wandfläche besitzt, die etwa parallel zu der Achse des Trägerrohres verläuft, wobei innerhalb des Trägerrohres (1) an dem dem Eintauchende des Trägerrohres (1) abgewandten Ende des Einlaufkanals (4) oberhalb der Flachprobenkammer (2) zwischen dem Einlaufkanal (4) und der Einströmöffnung (5) eine Vorkammer (3) angeordnet ist, deren Querschnittsfläche quer zur Einströmrichtung durch die Einströmöffnung (5) größer ist als die Querschnittsfläche der Einströmöffnung (5) und deren Querschnittsfläche quer zur Achse des Einlaufkanals (4) im Bereich seines Einlaufes größer ist als die Querschnittsfläche des Einlaufes des Einlaufkanals (4), dadurch gekennzeichnet, daß die Wandstärke der Vorkammer (3) in dem Bereich ihres Eintauchendes etwa 1 bis 5 mm und in dem dem Eintauchende abgewandten Bereich etwa 2 bis 10 mm beträgt, wobei die Einströmöffnung (5) in dem dem Eintauchende abgewandten Bereich mit der größeren Wandstärke angeordnet ist.

2. Probennehmer nach Anspruch 1, dadurch gekennzeichnet, daß die Wände (9) der Vorkammer (3) und die Umrandung der Einströmöffnung (5) aus hochschmelzendem Metall gebildet sind.

3. Probennehmer nach Anspruch 1 oder 2, dadurch gekennzeichnet, daß Vorkammer (3) und Einlaufkanal (4) zylindrisch ausgebildet sind und der Durchmesser der Vorkammer (3) mindestens doppelt so groß ist wie der Durchmesser des Einlaufkanals (4).

4. Probennehmer nach einem der Ansprüche 1 bis 3, dadurch gekennzeichnet, daß der Durchmesser des Einlaufkanals (4) kleiner ist als der Durchmesser der Einströmöffnung (5).

5. Probennehmer nach einem der Ansprüche 1 bis 4, dadurch gekennzeichnet, daß der Durchmesser der Vorkammer (3) etwa 22 bis 50 mm beträgt.

6. Probennehmer nach Anspruch 5, dadurch gekennzeichnet, daß der Durchmesser der Vorkammer (3) etwa 30 bis 40 mm beträgt.

7. Probennehmer nach einem der Ansprüche 1 bis 6, dadurch gekennzeichnet, daß der Durchmesser des Einlaufkanals (4) etwa 5 bis 11 mm beträgt.

8. Probennehmer nach Anspruch 7, dadurch gekennzeichnet, daß der Durchmesser des Einlaufkanals (4) etwa 8 bis 9 mm beträgt.

9. Probennehmer nach Anspruch 1, dadurch gekennzeichnet, daß die Wandstärke der Vorkammer (3) in dem Bereich ihres Eintauchendes etwa 1 bis 2 mm und in dem dem Eintauchende abgewandten Bereich etwa 3 bis 4 mm beträgt.

10. Probennehmer nach Anspruch 1 oder 9, dadurch gekennzeichnet, daß der Bereich mit der geringeren Wandstärke etwa 1 bis 3 mal so lang ist, wie der Bereich mit der größeren Wandstärke.

11. Probennehmer nach einem der Ansprüche 1 bis 10, dadurch gekennzeichnet, daß die Flachprobenkammer (2) mindestens zwei Kammerbereiche mit unterschiedlicher Dicke aufweist, die in Einlaufrichtung gesehen hintereinander angeordnet sind, wobei der Kammerbereich mit der größeren Dicke in dem dem Eintauchende abgewandten Ende der Flachprobenkammer (2) angeordnet ist.

## Claims

1. A sampler for molten metal with a flat sample chamber arranged in a carrier tube, which chamber has an inlet duct, arranged on the side of the flat sample chamber facing away from the immersion end of the carrier tube, with an inflow opening, and which has a wall surface forming a sample analysis surface, which runs approximately parallel to the axis of the carrier tube, wherein a pre-chamber (3) is arranged inside the carrier tube (1) on the end of the inlet duct (4) facing away from the immersion end of the carrier tube (1), above the flat sample chamber (2) between the inlet duct (4) and the inflow opening (5), the cross-sectional area of which pre-chamber (3) transversely to the inflow direction through the inflow opening (5) is greater than the cross-sectional area of the inflow opening (5) and the cross-sectional area of which transversely to the axis of the inlet duct (4) in the region of its inlet is greater than the cross-sectional area of the inlet of the inlet duct (4), characterised in that the wall thickness of the pre-chamber (3) in the region of its immersion end amounts to approximately 1 to 5 mm and in the region facing away from the immersion end amounts to approximately 2 to 10 mm, the inflow opening (5) being arranged in the region with the greater wall thickness facing away from the immersion end.

2. A sampler according to Claim 1, characterised in that the walls (9) of the pre-chamber (3) and the edging of the inflow opening (5) are formed from high-melting metal.

3. A sampler according to Claim 1 or 2, characterised in that the pre-chamber (3) and inlet duct (4) are constructed so as to be cylindrical and the diameter of the pre-chamber (3) is at least twice as great as the diameter of the inlet duct (4).

4. A sampler according to one of Claims 1 to 3, characterised in that the diameter of the inlet duct (4) is smaller than the diameter of the inflow opening (5).

5. A sampler according to one of Claims 1 to 4, characterised in that the diameter of the pre-chamber (3) amounts to approximately 22 to 50 mm.

6. A sampler according to Claim 5, characterised in that the diameter of the pre-chamber (3) amounts to approximately 30 to 40 mm.

7. A sampler according to one of Claims 1 to 6, characterised in that the diameter of the inlet duct (4) amounts to approximately 5 to 11 mm.

8. A sampler according to Claim 7, characterised in that the diameter of the inlet duct (4) amounts to approximately 8 to 9 mm.

9. A sampler according to Claim 1, characterised in that the wall thickness of the pre-chamber (3) amounts to approximately 1 to 2 mm in the region of its immersion end and amounts to approximately 3 to 4 mm in the region facing away from the immersion end.

10. A sampler according to Claim 1 or 9, characterised in that the region with the smaller wall thickness is approximately 1 to 3 times as long as the region with the greater wall thickness.

11. A sampler according to one of Claims 1 to 10, characterised in that the flat sample chamber (2) has at least two chamber regions with differing thickness which are arranged one behind the other, viewed in the inlet direction, the chamber region with the greater thickness being arranged in the end of the flat sample chamber (2) facing away from the immersion end.

## Revendications

1. Echantillonneur pour du métal en fusion, comportant une chambre d'échantillonnage aplatie agencée dans un tube porteur, qui présente un canal d'entrée agencé sur le côté de la chambre d'échantillonnage aplatie détourné de l'extrémité de plongée du tube porteur, ledit canal présentant une ouverture d'entrée, et qui possède une surface de paroi formant une surface d'analyse d'échantillon qui s'étend approximativement parallèlement à l'axe du tube porteur, dans lequel est prévue une chambre préliminaire (3) à l'intérieur du tube porteur (1) à l'extrémité du canal d'entrée (4) qui est détournée de l'extrémité de plongée du tube porteur (1), au-dessus de la chambre d'échantillonnage aplatie (2) entre le canal d'entrée (4) et l'ouverture d'entrée (4), chambre préliminaire dont la surface de section transversalement à la direction d'entrée à travers l'ouverture d'entrée (5) est supérieure à la surface de section transversale de l'ouverture d'entrée (5), et dont la surface de section transversalement à l'axe du canal d'entrée (4) dans la région de son entrée est supérieure à la surface de section transversale de l'entrée du canal d'entrée (4), caractérisé en ce que l'épaisseur de paroi de la chambre préliminaire (3) dans la région de son extrémité de plongée est d'environ 1 à 5 mm, et dans la région détournée de l'extrémité de plongée d'environ 2 à 10 mm, l'ouverture d'entrée (5) étant ménagée dans la région qui est détournée de l'extrémité de plongée et qui présente l'épaisseur de paroi plus importante.

2. Echantillonneur selon la revendication 1, caractérisé en ce que les parois (9) de la chambre préliminaire (3) et l'entourage de l'ouverture d'entrée (5) sont formés en un métal à haut point de fusion.

3. Echantillonneur selon l'une ou l'autre des revendications 1 et 2, caractérisé en ce que la chambre préliminaire (3) et le canal d'entrée (4) sont réalisés en forme cylindrique et le diamètre de la chambre préliminaire (3) est au moins deux fois plus grand que le diamètre du canal d'entrée (4).

4. Echantillonneur selon l'une quelconque des revendications 1 à 3, caractérisé en ce que le diamètre du canal d'entrée (4) est inférieur au diamètre de l'ouverture d'entrée (5).

5. Echantillonneur selon l'une quelconque des revendications 1 à 4, caractérisé en ce que le diamètre de la chambre préliminaire (3) est d'environ 22 à 50 mm.

6. Echantillonneur selon la revendication 5, caractérisé en ce que le diamètre de la chambre préliminaire (3) est d'environ 30 à 40 mm.

7. Echantillonneur selon l'une quelconque des revendications 1 à 6, caractérisé en ce que le diamètre du canal d'entrée (4) est d'environ 5 à 11 mm.

8. Echantillonneur selon la revendication 7, caractérisé en ce que le diamètre du canal d'entrée (4) est d'environ 8 à 9 mm.

9. Echantillonneur selon la revendication 1, caractérisé en ce que l'épaisseur de paroi de la chambre préliminaire (3) dans la région de son extrémité de plongée est d'environ 1 à 2 mm et dans la région détournée de l'extrémité de plongée d'environ 3 à 4 mm.

10. Echantillonneur selon l'une ou l'autre des revendications 1 et 9, caractérisé en ce que la région présentant l'épaisseur de paroi plus faible a approximativement une à trois fois la longueur de la région présentant l'épaisseur de paroi plus importante.

11. Echantillonneur selon l'une quelconque des revendications 1 à 10, caractérisé en ce que la chambre d'échantillonnage aplatie (2) présente au moins deux régions de différentes épaisseurs, qui sont agencées l'une derrière l'autre, vues en direction d'entrée, la région de chambre présentant l'épaisseur plus importante étant agencée à l'extrémité de la chambre d'échantillonnage aplatie (2) qui est détournée de l'extrémité de plongée.
